# EUROPÄISCHE PATENTSCHRIFT

(11) **EP 1 544 643 B1**
(45) Veröffentlichungstag und Bekanntmachung des Hinweises auf die Patenterteilung: **22.11.2006**
(21) Anmeldenummer: 04024903.9
(22) Anmeldetag: 20.10.2004
(51) Int. Cl.: G01V 8/20

(54) **Verfahren und Vorrichtung zur Flächenüberwachung mit mehreren nebeneinander angeordneten Lichtsendern**
Method and device for the surveillance of an area with several light emitters arranged side by side
Procédé et dispositif pour la surveillance d'une zone avec plusieurs émetteurs de lumière disposés côte à côte

(30) Priorität: 19.12.2003 DE 10359782
(43) Veröffentlichungstag der Anmeldung: 22.06.2005
(73) Patentinhaber: SICK AG, 79183 Waldkirch (DE)
(72) Erfinder: Meyer, Christof J., 79261 Bleibach (DE)
(74) Vertreter: Ludewigt, Christoph

(56) Entgegenhaltungen:
- EP-A- 0 522 478
- US-B1- 6 167 991

## Beschreibung

Die Erfindung betrifft ein Verfahren zur berührungslosen Flächenüberwachung mit mehreren nebeneinander angeordneten Lichtsendern und mehreren nebeneinander angeordneten Lichtempfängern die mehrere zusammenarbeitende Paare bilden und damit die zu überwachende Fläche mit mehreren parallel zueinander angeordneten Lichtstrahlen durchdringen. Weiterhin ist die Erfindung auf eine Vorrichtung zur Durchführung eines solchen Verfahrens gerichtet.

Solche Verfahren sowie eine solche Vorrichtung werden beispielsweise bei Schutzeinrichtungen an gefährlichen Werkzeugmaschinen, insbesondere in Form von mehrstrahligen Lichtgittern verwendet. Dazu werden mehrere Lichtsender und Lichtempfänger in einem gemeinsamen Gehäuse auf einer Seite der Überwachungsfläche angeordnet, während auf der gegenüberliegenden Seite der Überwachungsfläche ein Retroreflektor zur Rückspiegelung des von den Lichtsendern abgestrahlten Lichtes zu den Lichtempfängern angeordnet ist.

Ebenfalls sind derartige Schutzeinrichtungen auch als Einwegsysteme bekannt, bei denen sich die Lichtsender auf der einen Seite der Überwachungsfläche befinden, während die gegenüberliegende Seite durch die Lichtempfänger begrenzt wird. In beiden Fällen werden beispielsweise von einer Steuereinheit zeitlich nacheinander die einzelnen zusammenwirkenden Paare, bestehend aus jeweils einem Lichtsender und dem dazugehörenden Lichtempfänger, aktiviert. Dieser Vorgang wird dann zyklisch wiederholt. Auf diese Weise einsteht innerhalb der Überwachungsfläche ein optisches Lichtgitter, das in der Lage ist, ein Hindernis, welches zumindest einen Lichtstrahl vom Lichtsender zum Lichtempfänger unterbricht, zu erkennen.

Wenn dies der Fall ist, wird ein entsprechendes optisches und/oder akustisches Warnsignal abgegeben bzw. die gefahrbringende Maschine stillgesetzt. Damit insbesondere bei diesen Lichtgittern, die nach dem Einwegsystem arbeiten, eine sichere Funktion selbst unter Schock- und Vibrationsbelastung am Einsatzort sichergestellt ist, senden die Lichtsender ihr Licht nicht in Form eines dünnen parallelen Lichtstrahles, sondern in Form eines sich öffnenden Sendekegels aus. In analoger Weise kann der Lichtempfänger Licht aufnehmen, das aus einem Empfangskegel kommend auf den Lichtempfänger auftritt.

Patentschrift US 6 167 991 B1 offenbart ein Verfahren und eine Vorrichtung zur Bestimmung der Entfernung zwischen gegenüber liegenden Seiten eines Fahrstuhltürsystems. Es wird die Entfernung zwischen einer Vielzahl von Sendern und einer Vielzahl von Empfängern bestimmt, welche an gegenüber liegenden Seiten des Fahrstuhltürsystems befestigt sind.

Nachteilig am bekannten Stand der Technik ist, dass durch den kegelförmigen Sendelichtstrahl mit zunehmender Überwachungsfeldbreite die Leuchtdichte abnimmt und dadurch ein durch den Lichteinfall am Lichtempfänger hervorgerufener Signalpegel deutlich geringer wird. Aus diesem Grunde liegt der Signalpegel bei unterschiedlichen Überwachungsfeldbreiten innerhalb eines großen Dynamikbereiches. Zur eindeutigen Aussage, dass sich kein Objekt im Überwachungsfeld befindet, ist es notwendig, dass der Signalpegel eine interne Schaltschwelle der Lichtschranke bzw. des Lichtgitters übersteigt. Deshalb muss die Schaltschwelle so eingestellt sein, dass sie bei freiem Überwachungsfeld auch von einem niedrigen Signalpegel noch überschritten wird. Wenn jedoch die Situation auftritt, dass die Überwachungsfeldbreite gering, d. h. der Signalpegel sehr hoch ist und damit weit über der Schaltschwelle liegt, kann dies Funktionsprobleme bei der Lichtschranke bzw. beim Lichtgitter hervorrufen. Diese Probleme haben meist die Ursache, dass Umspiegelungseffekte bei den Hindernissen oder Anfälligkeit auf Störstrahlungen auftreten. Um dies zu vermeiden ist es notwendig, die Schaltschwelle an die Überwachungsfeldbreite anzupassen. Wenn diese notwendige Schaltschwellenanpassung bereits werkseitig vorgenommen wird, führt dies zu einer Vielzahl von Gerätevarianten, die sowohl für den Hersteller als auch den Anwender unwirtschaftlich ist. Wird diese Schaltschwellenanpassung dagegen vom Anwender durchgeführt, so ist die Gefahr einer fehlerhaften Einstellung nicht auszuschließen, was letztlich zu einem Sicherheitsrisiko führen kann.

Der Erfindung liegt die Aufgabe zugrunde, ein Verfahren und eine Vorrichtung der eingangs genannten Art derart auszubilden, dass die aktuelle Überwachungsfeld-breite erkannt und in Abhängigkeit von der ermittelten Überwachungsfeldbreite dann die optimale Schaltschwelle eingestellt wird.

Der das Verfahren betreffende Teil der Aufgabe wird ausgehend von einem Verfahren der eingangs genannten Art erfindungsgemäß durch ein Verfahren gemäß Anspruch 1 gelöst, welches dadurch gekennzeichnet ist dass in einem Abstandsermittlungsmodus aus der Anzahl der von einem Lichtempfänger sichtbaren Lichtsender und/oder aus der Anzahl der einen Lichtsender sehenden Lichtempfänger der Abstand der Lichtsender zu den Lichtempfängern ermittelt wird. Zu diesem Zweck werden im Abstandsermittlungsmodus beispielsweise alle Lichtsender zeitlich nacheinander aktiviert, während in diesem Zeitraum jedoch nur ein Lichtempfänger auf Empfangsbereitschaft geschaltet ist. Der Lichtempfänger erhält somit nacheinander von jedem Lichtsender, der sich innerhalb seines Empfangskegels befindet, ein Lichtsignal. Eine Steuereinheit ist dann in der Lage, aus der Anzahl der von einem Lichtempfänger erkannten Lichtsignale unter Berücksichtigung der Größe des Empfangskegels und dem Abstand der Lichtsender zueinander, die Überwachungsfeldbreite zu bestimmen.

Der die Vorrichtung betreffende Teil der Aufgabe wird ausgehend von einer Vorrichtung der eingangs genannten Art erfindungsgemäß durch eine Vorrichtung gemäß Anspruch 9 gelöst, welche dadurch gekennzeichnet ist dass in der Steuereinheit Mittel zur Bestimmung der Anzahl der von einem Lichtempfänger sichtbaren Lichtsender und/oder der Anzahl der einen Lichtsender sehenden Lichtempfänger vorhanden sind und dadurch der Abstand der Lichtsender zu den Lichtempfängern ermittelbar ist.

Der Vorteil dieser Erfindung ist darin zu sehen, dass es ohne zusätzliche optische/optoelektronische Komponenten, sondern nur durch eine von der Steuereinheit ausgelöste zyklische oder anlassgesteuerte Umschaltung vom Überwachungsmodus in den Abstandsermittlungsmodus möglich ist, die Überwachungsfeldbreite zu bestimmen, um dann die optimale Schaltschwelle für die Lichtempfänger im Überwachungsmodus festlegen zu können. Dadurch kann ein Lichtgitter für unterschiedliche Überwachungsfeldbreiten verwendet werden, ohne dass dadurch hinsichtlich der sicheren Erkennung von Hindernissen kritische Situationen, hervorgerufen durch Umspiegelung oder dergleichen, entstehen können.

Bei einer vorteilhaften Ausbildung der Erfindung ist es vorgesehen, dass die Größe des Sendekegels der Lichtsender bzw. die Größe der Empfangskegel der Lichtempfänger nicht durch eine aufwendige Justage auf einen exakten Wert bei der werksseitigen Montage festgelegt werden müssen, sondern diese Werte während eines Einlernvorgangs selbständig ermittelt werden. Dies kann beispielsweise dadurch ausgeführt werden, dass im Abstandsermittlungsmodus bei bekannter Überwachungsfeldbreite die Anzahl der von einem Lichtempfänger sichtbaren Lichtsender und/oder die Anzahl der einen Lichtsender sehenden Lichtempfänger ermittelt wird und daraus der Winkel des Sendekegels und des Empfangskegel berechnet wird.

In einer vorteilhaften Weiterbildung ist es vorgesehen, dass für die Festlegung der Schaltschwelle die im Abstandsermittlungsmodus gewonnene Abstandsinformation mit dem am Lichtempfänger vorhandenen Signalpegel korreliert wird. Auf diese Weise kann bei der Schaltschwelleneinstellung auch der aktuelle Verschmutzungsgrad der optischen Grenzflächen und/oder der altersbedingte Leistungsabfall der einzelnen optoelektronischen Komponenten berücksichtigt werden. Dies hat den großen Vorteil, dass die Intervalle zur Reinigung der Grenzflächen verlängert werden können.

In einer zweckmäßigen Ausführungsform ist weiterhin vorgesehen, im Abstandsermittlungsmodus aus der Anzahl von mehreren Einzelwerten einen Mittelwert zu bilden, um damit die Genauigkeit bei der Bestimmung der Überwachungsfeldbreite zu verbessern.

Eine Modifikation des Erfindungsgedanken sieht vor, die Anzahl der von einem Lichtempfänger sichtbaren Lichtsender und/oder aus der Anzahl der einen Lichtsender sehenden Lichtempfänger als Hilfe für die mechanische Ausrichtung der Lichtsender auf die Lichtempfänger und umgekehrt zu verwenden. Zu diesem Zweck werden beispielsweise die Anzahl der vom ersten Lichtempfänger gesehenen Lichtsender mit der Anzahl der vom letzten Lichtempfänger gesehenen Lichtsender verglichen. Die Lichtsender bzw. die Lichtempfänger werden dann so verschoben bzw. verkippt, dass die Anzahl symmetrisch aufgeteilt ist.

Erfindungsgemäß wird weiter vorgeschlagen, die im Abstandsermittlungsmodus ermittelte Anzahl der von einem Lichtempfänger sichtbaren Lichtsender und/oder aus der Anzahl der einen Lichtsender sehenden Lichtempfänger den Abstand der Lichtsender zu den Lichtempfängern zu einer Ortsbestimmung des Objektes innerhalb des Überwachungsfeldes zu verwenden. Liegt nämlich ein Objekt näher bei den Lichtsendern, so können mehrere der Lichtempfänger von diesem Lichtsender kein Licht empfangen. Liegt der Eingriff durch ein Objekt jedoch näher beim Lichtempfänger, so werden nur einer oder nur wenige Lichtempfänger dadurch gehindert, Licht von den Lichtsendern zu empfangen.

Die Erfindung wird im Folgenden beispielhaft unter Bezugnahme auf die Zeichnungen im Einzelnen erläutert.
In den Zeichnungen zeigen:
- Figur 1: eine schematische Darstellung eines Lichtgitters zur Flächenüberwachung.
- Figur 2: eine schematische Darstellung eines Lichtgitters bei fehlerhafter Ausrichtung.
- Figur 3: eine schematische Darstellung eines Lichtgitters zur Ortsbestimmung eines Objektes.

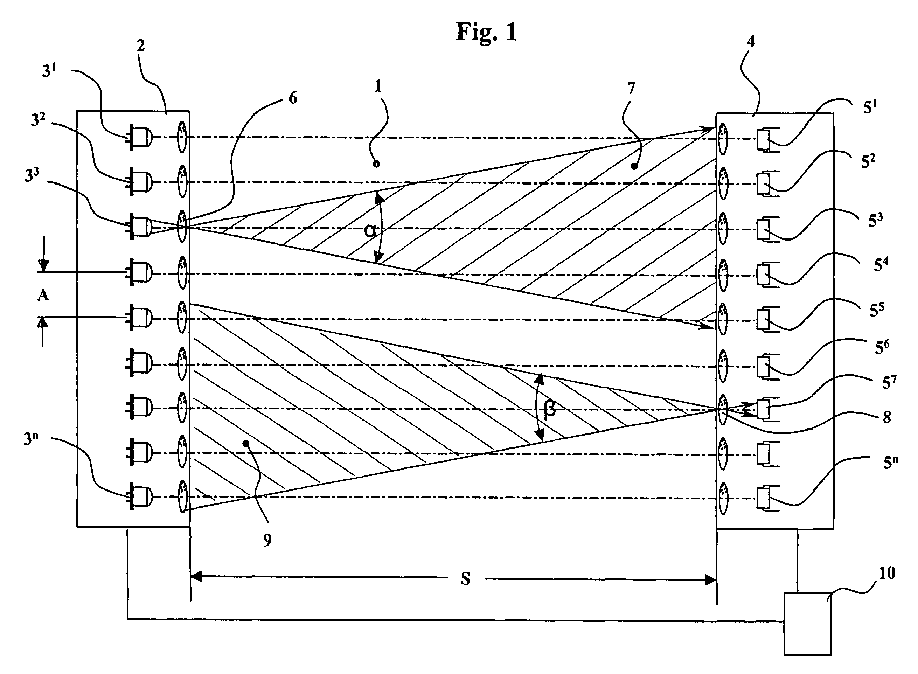

Gemäß Figur 1 befinden sich auf einer Seite eines Überwachungsfeldes 1 in einem Sendergehäuse 2 nebeneinander angeordnet mehrere Lichtsender 3¹, 3², 3³ bis 3ⁿ. Auf der gegenüberliegenden Seite des Überwachungsfeldes 1 sind in einem Empfängergehäuse 4 nebeneinander mehrere Lichtempfänger 5¹, 5², 5³ bis 5ⁿ angeordnet. Vor jedem Lichtsender 3 ist eine Sendeoptik 6 angeordnet, die das in das Überwachungsfeld eindringende Sendelicht zu einem Sendekegel 7 mit einem Sendekegelwinkel α formt. Vor jedem Lichtempfänger 5 ist eine Empfangslinse 8, welche das innerhalb eines Empfangskegels 9 mit einem Empfangskegelwinkel β auftreffende Licht auf den Lichtempfänger konzentriert.

Im Überwachungsmodus, d. h. in dem Zustand, in dem das Überwachungsfeld 1 auf ein eindringendes Objekt kontrolliert wird, werden von einer Steuereinheit 10 paarweise die Lichtsender 3¹ und der Lichtempfänger 5¹ aktiviert. In diesem kurzen Zeitintervall sendet nur der Lichtsender 3¹ Licht in das Überwachungsfeld 1, gleichzeitig ist nur der Lichtempfänger 5¹ empfangsbereit. Zeitlich nacheinander und zyklisch werden in dieser Art alle um einen Abstand A versetzten Lichtsender-Lichtempfängerpaare kurzzeitig aktiviert. Das Überwachungsfeld 1 ist somit nach Aktivierung aller Paare vollständig überwacht worden.

Im Abstandsermittlungsmodus dagegen wird zum Beispiel von der Steuereinheit 10 nur der Lichtsender 3³ aktiviert und in diesem Zeitraum gleichzeitig oder nacheinander alle Lichtempfänger 5¹, 5², 5³ bis 5ⁿ. Bei dem in Figur 1 dargestellten Sendekegelwinkel α sowie dem Abstand A der benachbarten Lichtsender-Lichtempfängerpaare und der Breite S des Überwachungsfeldes 1 können die fünf Lichtempfänger 5¹ bis 5⁵ den Lichtsender 3³ erkennen. Verkleinert sich die Breite S des Überwachungsfeldes 1, wird die Anzahl der Lichtempfänger 5, die den Lichtsender 3³ erkennen können, geringer. Analog dazu nimmt die Anzahl bei Vergrößerung der Breite S zu.

Nach dem gleichem Prinzip ist es auch möglich, dass im Abstandsermittlungsmodus von der Steuereinheit nur der Lichtempfänger 5⁷ empfangsbereit geschaltet wird und dabei die Lichtsender 3¹, 3², 3³ bis 3ⁿ nacheinander Licht abstrahlen. Auch in diesem Fall kann aus den am Lichtempfänger 5⁷ aufgenommen Lichtsignalen die Anzahl der gesehenen Sender ermittelt werden.

Da der Sendekegelwinkel α bzw. der Empfangskegelwinkel β und der Abstand A der benachbarten Lichtsender-Lichtempfängerpaare konstante Größen sind, kann beispielsweise mit einer Konkordanztabelle aus der jeweiligen Anzahl der einen Lichtsender 3 sehenden Lichtempfänger 5 bzw. der von einem Lichtempfänger 5 sichtbaren Lichtsender 3 die Breite S des Überwachungsfeldes 1 bestimmt werden.

Die von der Steuereinheit 10 ausgelöste Umschaltung zwischen dem Überwachungsmodus und dem Abstandsermittlungsmodus kann dabei entweder zyklisch oder anlassbezogen durchgeführt werden. Im Falle einer zyklischen Umschaltung kann beispielsweise der Umschaltvorgang als ein fester Bestandteil im sich laufend wiederholenden Aktivierungsvorgang der Lichtsender-Lichtempfängerpaare enthalten sein. D. h. immer vor oder nach der einmaligen Aktivierung aller Lichtsender-Lichtempfängerpaare wird kurzzeitig der Abstandsermittlungsmodus aufgerufen.

Eine anlassbezogene Umschaltung liegt beispielsweise dann vor, wenn jeweils bei der Inbetriebnahme der Flächenüberwachung zunächst der Abstandsermittlungsmodus aufgerufen wird und erst dann in den Überwachungsmodus umgeschaltet wird.

Wie aus Figur 1 auch ersichtlich ist, wird das von einem Lichtsender 3 in das Überwachungsfeld 1 eingestrahlte Licht aufgrund des Sendekegels 7 mit zunehmendem Abstand vom Lichtsender 3 auf einen immer größer werdenden Lichtstrahlquerschnitt verteilt, mit der Folge, dass die Leuchtdichte abnimmt. Dies hat zur Folge, dass mit zunehmender Breite S des Überwachungsfeldes 1 am jeweiligen Lichtempfänger 5 weniger Licht auftrifft. Aus diesem Grunde muss eine in Figur 1 nicht dargestellte, aber jedem Lichtempfänger 5 nachgeschaltete elektrische Eingangsstufe in ihrer Empfindlichkeit so eingestellt sein, dass auch diese geringe Lichtmenge, wie sie bei maximaler Breite S des Überwachungsfeldes 1 vorliegt, noch sicher detektiert werden kann. Dies kann beispielsweise dadurch erreicht werden, dass die Schaltschwelle in der elektrischen Eingangsstufe auf einen solchen Wert gelegt wird, dass er auch von der durch eine geringe Lichtmenge im Lichtempfänger 5 ausgelösten elektrischen Größe überschritten wird. Wird jedoch die Breite S des Überwachungsfeldes 1 verringert, so steigt die Leuchtdichte und damit auch die am Lichtempfänger 5 ausgelöste elektrische Größe an und die Schaltschwelle wird deutlich überschritten. In diesen Fällen besteht das Risiko der nicht sicheren Erkennung eines Objektes, weil schon ein geringer Lichtanteil, verursacht zum Beispiel durch Spiegelungen an in der Nähe des Überwachungsfeldes 1 liegenden Maschinenflächen, dazu führen kann, dass die Schaltschwelle in der elektrischen Eingangsstufe des Lichtempfängers überschritten wird. Diese Situation kann dadurch verhindert werden, dass aus der ermittelten Abstandsinformation die Schaltschwelle in der elektrischen Eingangsstufe entsprechend angepasst wird.

Bedingt durch Montage- und Bauteiltoleranzen kann der Sendekegelwinkel α und der Empfangskegelwinkel β innerhalb eines gewissen Streubereiches liegen, was dazu führen kann, dass bei der Ermittlung der Breite S des Überwachungsfeldes 1 Fehler auftreten können. Dies kann dadurch beseitigt oder zumindest reduziert werden, wenn bereits werksseitig die tatsächlichen Sendekegelwinkel α und die Empfangskegelwinkel β für jeden Lichtsender und für jeden Lichtempfänger eingelernt und in einem nichtflüchtigen Speicher hinterlegt werden. Im Abstandsermittlungsmodus werden diese Werte dann bei der Ermittlung der Breite S des Überwachungsfeldes 1 berücksichtigt.
Eine weitere Möglichkeit zur Verbesserung der Genauigkeit bei der Ermittlung der Breite S des Überwachungsfeldes 1 ist dann gegeben, wenn die Ermittlung der Anzahl der von einem Lichtempfänger 5 sichtbaren Lichtsender 3 und/oder die Anzahl der einen Lichtsender 3 sehenden Lichtempfänger 5 mit mehreren Lichtsender/Lichtempfängerkombinationen durchgeführt wird und das Endergebnis aus dem Mittelwert der Einzelmessungen gebildet wird.

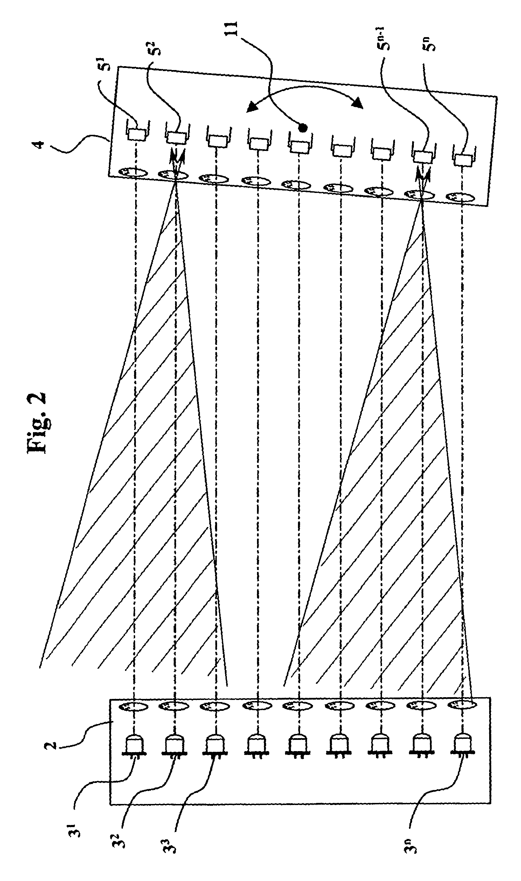

In der Figur 2 ist ein Lichtgitter dargestellt, bei dem das Sendergehäuse 2 mit den Lichtsendern 3¹, 3², 3³ bis 3ⁿ auf der einen Seite des Überwachungsfeldes 1 und das Empfängergehäuse 4 mit den Lichtempfängern 5¹, 5², 5³ bis 5ⁿ auf der gegenüberliegenden Seite des Überwachungsfeldes 1 nicht optimal aufeinander ausgerichtet sind. In diesem Falle kann das Lichtgitter im Abstandsermittlungsmodus die Aussage liefern, dass wie in Figur 2 dargestellt, der Lichtempfänger 5² drei Lichtsender erkennen kann, während der Lichtempfänger 5ⁿ⁻¹ das Licht von fünf Lichtsendern empfängt. Wird nun das Sendergehäuse 4 um eine senkrecht zur Zeichenebene stehende Achse 11 so gedreht, dass die beiden Lichtsender 5² und 5ⁿ⁻¹ gleich viele Lichtsender erkennen können, ist die Ausrichtung der beiden Gehäuse 2 und 4 in dieser Achse gut aufeinander eingestellt.

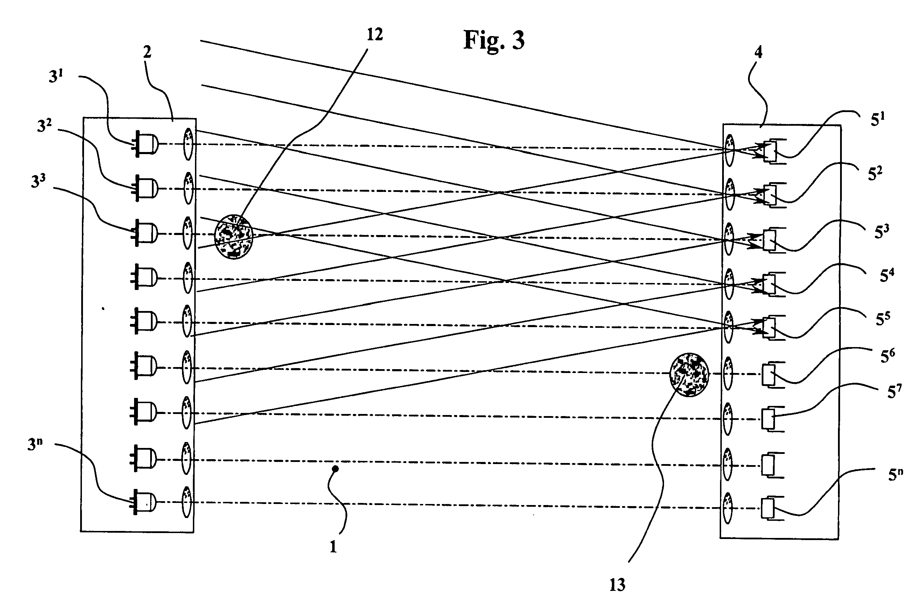

Im Abstandsermittlungsmodus kann, wie in Figur 3 dargestellt ist, neben der Ermittlung der Breite S des Überwachungsfeldes 1 zur Schaltschwellenanpassung und dem Symmetrievergleich zur Ausrichthilfe auch eine Horizontalinformation zur Ortsbestimmung eines Objektes innerhalb des Überwachungsfeldes 1 gewonnen werden. Die zur Ortsbestimmung notwendige Vertikalinformation wird von den Lichtsender-Lichtempfängerpaaren gewonnen, deren Lichtstrom im Überwachungsmodus durch das Objekt unterbrochen wird. Ebenso ist es auf diese Weise möglich, auch eine Information über die Objektgröße zu erhalten. Die Horizontalinformation zur Ortsbestimmung dagegen kann, wie Figur 3 zeigt, aus der Anzahl der von einem Lichtempfänger 5 sichtbaren Lichtsender 3 abgeleitet werden. Ist zum Beispiel ein Objekt 12 in der Nähe der Lichtsender 3 angeordnet, so wird dieses Objekt 12 im Abstandsermittlungsmodus von den Lichtempfängern 5¹ bis 5⁵ erkannt. Ein Objekt 13, das in der Nähe der Lichtempfänger 5 platziert ist, wird dagegen nur vom Lichtempfänger 5⁶ erkannt. Somit ist aufgezeigt, dass aus der im Abstandsermittlungsmodus gewonnen Anzahl der Lichtempfänger, welche ein Objekt erkennen und/oder aus der Anzahl der Lichtsender, die von einem Objekt verdeckt werden, eine Horizontalinformation ermittelbar ist.

Die von der Steuereinheit 10 gesteuerte Umschaltung vom Überwachungsmodus in den Abstandsermittlungsmodus und umgekehrt kann sowohl zyklisch als auch anlassbezogen durchgeführt werden. Eine zyklische Umschaltung liegt zum Beispiel dann vor, wenn immer nach der vollständigen Aktivierung aller Lichtschrankenpaare im Überwachungsmodus kurzfristig der Abstandsermittlungsmodus eingeschaltet wird um beispielsweise die Justage der beiden Gehäuse 2 und 4 zu kontrollieren.

Eine anlassbezogene Umschaltung ist beispielsweise dann realisiert, wenn bei jeder Inbetriebnahme oder nach jeder Erkennung eines Objektes zunächst der Abstandsermittlungsmodus aufgerufen wird. Zu diesem Zeitpunkt wird dann die optimale Lage der Schaltschwelle überprüft und gegebenenfalls korrigiert. Erst nach diesem Vorgang wird von der Steuereinheit 10 wieder die Umschaltung in den Überwachungsmodus ausgelöst.

## Patentansprüche

1. Verfahren zur Flächenüberwachung mit mehreren nebeneinander angeordneten Lichtsendern (3), welche Licht in einen Sendekegel (α) abstrahlen und mehreren nebeneinander angeordneten Lichtempfängern (5), welche Licht aus einem Empfangskegel (β) aufnehmen, die mehrere zusammenarbeitende Paare bilden, die in einem Überwachungsmodus von einer Steuereinheit (10) einzeln, zeitlich nacheinander und zyklisch aktivierbar sind, **dadurch gekennzeichnet, dass** in einem Abstandsermitttungsmodus aus der Anzahl der von einem Lichtempfänger (5) sichtbaren Lichtsender (3) und/oder aus der Anzahl der einen Lichtsender (3) sehenden Lichtempfänger (5) der Abstand (s) der Lichtsender (3) zu den Lichtempfängern (5) ermittelt wird.

2. Verfahren nach Anspruch 1 **dadurch gekennzeichnet, dass** die Steuereinheit (10) zyklisch oder anlassgesteuert zwischen dem Überwachungsmodus und dem Abstandsermittlungsmodus umschaltet.

3. Verfahren nach einem der vorhergehenden Ansprüche, **dadurch gekennzeichnet, dass** in Abhängigkeit von dem im Abstandsermittlungsmodus ermittelten Abstand (s) die Schaltschwelle für die Lichtschrankenpaare im Überwachungsmodus nachgeführt wird.

4. Verfahren nach einem der vorhergehenden Ansprüche, **dadurch gekennzeichnet, dass** werksseitig die jeweilige Größe der Sendekegel (α) und/oder der Empfangskegel (β) eingelernt wird.

5. Verfahren nach einem der vorhergehenden Ansprüche, **dadurch gekennzeichnet, dass** zur Bestimmung des Abstandes (s) von Lichtsender (3) und Lichtempfänger (5) im Abstandsermittlungsmodus die Anzahl der von einem Lichtempfänger (5) sichtbaren Lichtsender (3) und/oder aus der Anzahl der einen Lichtsender (3) sehenden Lichtempfänger (5) mit dem Signalpegel korreliert wird.

6. Verfahren nach einem der vorhergehenden Ansprüche, **dadurch gekennzeichnet, dass** zur Bestimmung des Abstandes (s) von Lichtsender (3) und Lichtempfänger (5) im Abstandsermittlungsmodus der Mittelwert von mehreren Lichtempfängern (5) verwendet wird.

7. Verfahren nach einem der vorhergehenden Ansprüche, **dadurch gekennzeichnet, dass** die im Abstandsermittlungsmodus ermittelte Anzahl der von den Lichtempfängern (5) gesehenen Lichtsender (3) und/oder aus der Anzahl der einen Lichtsender (3) sehenden Lichtempfänger (5) zur mechanischen Ausrichtung der Lichtsenderbaugruppe auf die Lichtempfängerbaugruppe verwendet wird.

8. Verfahren nach einem der vorhergehenden Ansprüche, **dadurch gekennzeichnet, dass** die im Abstandsermittlungsmodus ermittelte Anzahl der von einem Lichtempfänger (5) gesehenen Lichtsender (3) und/oder aus der Anzahl der einen Lichtsender (3) sehenden Lichtempfänger (5) zur Ortsbestimmung eines Objektes (12, 13), das sich zwischen dem Lichtsender (3) und Lichtempfänger (5) befindet, verwendet wird.

9. Vorrichtung zur Flächenüberwachung mit mehreren nebeneinander angeordneten Lichtsendern (3), welche Licht in einen Sendekegel (α) abstrahlen und mehreren nebeneinander angeordneten Lichtempfängern (5), welche Licht aus einem Empfangskegel (β) aufnehmen, die mehrere zusammenarbeitende Paare bilden, die in einem Überwachungsmodus von einer Steuereinheit (10) einzeln, zeitlich nacheinander und zyklisch aktivierbar sind, **dadurch gekennzeichnet, dass** in der Steuereinheit (10) Mittel zur Bestimmung der Anzahl der von einem Lichtempfänger (5) sichtbaren Lichtsender (3) und/oder der Anzahl der einen Lichtsender (3) sehenden Lichtempfänger (5) vorhanden sind und **dadurch** der Abstand (s) der Lichtsender (3) zu den Lichtempfängern (5) ermittelbar ist.

10. Vorrichtung nach Anspruch 9, **dadurch gekennzeichnet, dass** die Steuereinheit (10) Mittel zur zyklischen oder anlassgesteuerten Umschaltung zwischen dem Überwachungsmodus und dem Abstandsermittlungsmodus besitzt.

11. Vorrichtung nach Anspruch 9 oder 10, **dadurch gekennzeichnet, dass** die Schaltschwelle für die Lichtschrankenpaare in Abhängigkeit von der im Abstandsermittlungsmodus ermittelten Abstandsinformation im Überwachungsmodus nachführbar ist.

12. Vorrichtung nach Anspruch 9 bis 11, **dadurch gekennzeichnet, dass** die Schaltschwelle für die Lichtschrankenpaare durch Korrelation der Signalpegel und der Anzahl der von einem Lichtempfänger (5) sichtbaren Lichtsender (3) und/oder aus der Anzahl der einen Lichtsender (3) sehenden Lichtempfänger (5) ermittelbar ist.

## Claims

1. Method for area surveillance with the aid of a number of light transmitters (3) arranged side by side, which emit light in a transmission cone (α), and a number of light receivers (5) which are arranged side by side and receive light from a reception cone (β), which transmitters and receivers form a number of cooperating pairs which can be activated individually, consecutively in time and cyclically in a surveillance mode by a control unit (10), **characterized in that** the distance(s) of the light transmitters (3) from the light receivers (5) is determined in a distance determination mode from the number of the light transmitters (3) visible to a light receiver (5), and/or from the number of the light receivers (5) which see a light transmitter (3).

2. Method according to Claim 1, **characterized in that** the control unit (10) switches over cyclically or under specific control between the surveillance mode and the distance determination mode.

3. Method according to one of the preceding claims, **characterized in that** the switching threshold for the light barrier pairs is tracked in the surveillance mode as a function of the distance(s) determined in the distance determination mode.

4. Method according to one of the preceding claims, **characterized in that** the respective size of the transmission cone (α) and/or the reception cone (β) is taught at the manufacturer's premises.

5. Method according to one of the preceding claims, **characterized in that** in order to determine the distance(s) from the light transmitter (3) and light receiver (5) in the distance determination mode, the number of the light transmitters (3) visible to a light receiver (5) and/or the number of the light receivers (5) which see a light transmitter (3) are/is correlated with the signal level.

6. Method according to one of the preceding claims, **characterized in that** the mean value of a number of light receivers (5) is used to determine the distance(s) of the light transmitter (3) and light receiver (5) in the distance determination mode.

7. Method according to one of the preceding claims, **characterized in that** the number, determined in the distance determination mode, of the light transmitters (3) seen by the light receivers (5), and/or the number of the light receivers (5) which see a light transmitter (3) are/is used for mechanically aligning the light transmitter module with the light receiver module.

8. Method according to one of the preceding claims, **characterized in that** the number, determined in the distance determination mode, of the light transmitters (3) seen by a light receiver (5), and/or the number of the light receivers (5) which see a light transmitter (3) are/is used to determine the location of an object (12, 13) which is located between the light transmitter (3) and light receiver (5).

9. Device for area surveillance with the aid of a number of light transmitters (3) arranged side by side, which emit light in a transmission cone (α), and a number of light receivers (5) which are arranged side by side and receive light from a reception cone (β), which transmitters and receivers form a number of cooperating pairs which can be activated individually, consecutively in time and cyclically in a surveillance mode by a control unit (10), **characterized in that** means for determining the number of the light transmitters (3) visible to a light receiver (5), and/or the number of the light receivers (5) which see a light transmitter (3) are present in the control unit (10), and the distance(s) of the light transmitters (3) from the light receivers (5) can thereby be determined.

10. Device according to Claim 9, **characterized in that** the control unit (10) has means for switching over cyclically or under specific control between the surveillance mode and the distance determination mode.

11. Device according to Claim 9 or 10, **characterized in that** the switching threshold for the light barrier pairs can be tracked in the surveillance mode as a function of the distance information determined in the distance determination mode.

12. Device according to Claims 9 to 11, **characterized in that** the switching threshold for the light barrier pairs can be determined by correlating the signal levels and the number of the light transmitters (3) visible to a light receiver (5) and/or the number of the light receivers (5) which see a light transmitter (3).

## Revendications

1. Procédé pour la surveillance de surface avec plusieurs émetteurs de lumière (3) disposés côte à côte, qui émettent de la lumière dans un cône d'émission (α) et plusieurs récepteurs de lumière (5) disposés les uns à côté des autres, qui réceptionnent de la lumière provenant d'un cône de réception (β), lesquels forment plusieurs paires travaillant ensemble, lesquelles peuvent être activées dans un mode de surveillance par une unité de commande (10) individuellement, de façon successive ou cyclique, **caractérisé en ce que** l'espacement (s) des émetteurs de lumière (3) aux récepteurs de lumière (5) est déterminé dans un mode de détermination de distance à partir du nombre des émetteurs de lumière (3) visibles par un récepteur de lumière (5) et/ou à partir du nombre des récepteurs de lumière (5) voyant un émetteur de lumière (3).

2. Procédé selon la revendication 1, **caractérisé en ce que** l'unité de commande (10) commute de façon cyclique ou commandée par démarrage entre le mode de surveillance et le mode de détermination de distance.

3. Procédé selon l'une quelconque des revendications précédentes, **caractérisé en ce que** le seuil de commutation pour les paires de barrières lumineuses est asservi dans le mode de surveillance en fonction de la distance (s) déterminée dans le mode de détermination de distance.

4. Procédé selon l'une quelconque des revendications précédentes, **caractérisé en ce que**, côté usine, la grandeur respective du cône d'émission (α) et/ou du cône de réception (β) est acquise par apprentissage.

5. Procédé selon l'une quelconque des revendications précédentes, **caractérisé en ce que**, pour déterminer l'espacement (s) de l'émetteur de lumière (3) et du récepteur de lumière (5) dans le mode de détermination de distance, le nombre des émetteurs de lumière (3) visibles par un récepteur de lumière (5) et/ou également le nombre des récepteurs de lumière (5) voyant un émetteur de lumière (3) est corrélé avec le niveau du signal.

6. Procédé selon l'une quelconque des revendications précédentes, **caractérisé en ce que**, pour déterminer l'espacement (s) de l'émetteur de lumière (3) et du récepteur de lumière (5) dans le mode de détermination de distance, on utilise la valeur moyenne de plusieurs récepteurs de lumière (5).

7. Procédé selon l'une quelconque des revendications précédentes, **caractérisé en ce que** le nombre, déterminé dans le mode de détermination de distance, des émetteurs de lumière (3) vus par les récepteurs de lumière (5) et/ou le nombre des récepteurs de lumière (5) voyant un émetteur de lumière (3) est utilisé pour l'alignement mécanique de l'ensemble émetteur de lumière sur l'ensemble récepteur de lumière.

8. Procédé selon l'une quelconque des revendications précédentes, **caractérisé en ce que** le nombre, déterminé dans le mode de détermination de distance, des émetteurs de lumière (3) vus par un récepteur de lumière (5) et/ou le nombre de récepteurs de lumière (5) voyant un émetteur de lumière (3) est utilisé pour la localisation d'un objet (12, 13) qui se trouve entre l'émetteur de lumière (3) et le récepteur de lumière (5).

9. Dispositif pour la surveillance de surface avec plusieurs émetteurs de lumière (3) disposés côte à côte, qui diffusent de la lumière dans un cône d'émission (α) et plusieurs récepteurs de lumière (5) disposés côte à côte, qui reçoivent de la lumière provenant d'un cône de réception (β), lesquels forment plusieurs paires travaillant ensemble, lesquels peuvent être activés dans un mode de surveillance par une unité de commande (10) individuellement, de façon consécutive et cyclique, **caractérisé en ce que** des moyens pour la détermination du nombre des émetteurs de lumière (3) visibles par un récepteur de lumière (5) et/ou du nombre des récepteurs de lumière (5) voyant un émetteur de lumière (3) sont présents dans l'unité de commande (10) et de ce fait la distance (s) des émetteurs de lumière (3) aux récepteurs de lumière (5) peut être déterminée.

10. Dispositif selon la revendication 9, **caractérisé en ce que** l'unité de commande (10) comporte des moyens pour la commutation cyclique ou commandée par démarrage entre le mode de surveillance et le mode de calcul de distance.

11. Dispositif selon la revendication 9 ou 10, **caractérisé en ce que** le seuil de commutation pour les paires de barrières lumineuses peut être asservi en fonction de l'information de distance déterminée dans le mode de détermination de distance dans le mode de surveillance.

12. Dispositif selon les revendications 9 à 11, **caractérisé en ce que** le seuil de commutation pour les paires de barrières lumineuses peut être déterminé par corrélation des niveaux de signal et du nombre des émetteurs de lumière (3) visibles par un émetteur de lumière (5) et/ou à partir du nombre des récepteurs de lumière (5) voyant un émetteur de lumière (3).
